# EUROPEAN PATENT SPECIFICATION

(11) **EP 4 099 106 B1**
(45) Date of publication and mention of the grant of the patent: **13.11.2024**
(21) Application number: 21177460.9
(22) Date of filing: 02.06.2021
(51) Int. Cl.: G05B 19/042

(54) **VALIDATION LOGIC FOR OPC UA CONNECTED DEVICES**
VALIDIERUNGSLOGIK FÜR OPC-UA-VERBUNDENE VORRICHTUNGEN
LOGIQUE DE VALIDATION POUR DISPOSITIFS UA OPC CONNECTÉS

(43) Date of publication of application: 07.12.2022
(73) Proprietor: ABB Schweiz AG, 5400 Baden (CH)
(72) Inventor: BRAUN, Roland, 53859 Niederkassel Lülsdorf (DE); HOERNICKE, Mario, 76829 Landau (DE)
(74) Representative: Maiwald GmbH

(56) References cited:
- EP-A1- 3 723 346
- US-A1- 2020 371 487

## Description

### FIELD OF THE INVENTION

The invention relates to validation logic for OPC UA-connected devices.

### BACKGROUND

Automated industrial plants typically comprise many field devices for implementing an industrial production process. Field devices are controlled by process controllers forming part of a distributed control system (DCS). Fieldbus communication interfaces are used to connect the field devices to the process controllers. Field devices are continually growing in functionality, resulting in complex parameter sets and complex device descriptions involving exhaustive conditional constraints on the circumstances under which parameters are used. Parameter settings may be interdependent: a modification to one parameter often requires a setting to be validated in combination with other settings. Validation logic that is intended to protect the integrity of the device settings is typically embedded within the firmware of the field device itself.

The validation logic may be implemented in various ways. Fieldbus standards (such as FF, HART, PROFIBUS) allow use of the standardized Electronic Device Description Language (EDDL, as specified by IEC 61804) to enable engineering tools to manage device parameters. Equally, the Field Device Tools (FDT) standard, IEC 62453, allows field device suppliers to offer a Device Type Manager (DTM) for managing device parameters.

The drawback of these solutions is the duplicated effort involved in implementing the validation logic as EDDL-implemented or DTM-implemented logic. Moreover, the use of EDDL is possible only in conjunction with an EDD interpreter that is costly to maintain.

Many "industry 4.0" concepts assume that field device connectivity will be implemented in the future using the Open Platform Communications Unified Architecture (OPC UA). The current solutions based on EDDL/FDT do not suit field devices that will implement OPC UA as their main form of connectivity. Future field devices comprising OPC UA servers will be described by means of an XML schema called a nodeset file. A nodeset file describes the address space of the field device. An OPC UA client can import the nodeset file to discover how to interact with the field device by reading / writing data or invoking methods.

US 2020/371487 A1 discloses an integrity check performed on a measurement dataset for a field device on the basis of operational policies set out in a configuration dataset for the field device. EP 3 723 346 A1 provides background information on selective address space aggregation.

### SUMMARY

There is therefore a need for improvements in the validation of parameter settings of a field device of an industrial automation system. This need is met by the subject-matter of the independent claims. Optional features are set forth by the dependent claims.

According to a first aspect, there is provided a method performed by an OPC UA client according to claim 1.

Validating the prepared data may comprise validating settings in the address space of the automation device. By "automation device" is meant in particular a field device or an instrument device but the automation device could be any OPC UA-enabled device.

The method comprises writing the validated data to the automation device. In one example, the data is written to the automation device during integration of the automation device into an automated industrial plant. In another example, the data is written to the automation device to convert parameters according to a first standard to parameters according to a second standard, wherein the first and second standards are mutually incompatible.

It will be understood that the data may prepared and validated in this way in the absence of the automation device. In one advantageous example, the data is prepared before an OPC UA server of the automation device has been deployed. Stated differently, the data may be prepared without the OPC client necessarily being connected to the automation device.

The present disclosure thus proposes to add PYTHON script-described business logic to nodeset files that enables a generic approach to validating settings in the address space of an OPC UA-connected field device without necessarily being connected to the field device. An OPC UA client having knowledge of a convention specifying where the validation logic is stored, and how to invoke and handle the execution of the validation logic, can prepare valid datasets for absent field devices. Storing the validation logic in the nodeset file in this way reduces the effort needed to create and maintain the logic that protects the logical integrity of device's data settings. Furthermore, the logic executed in the OPC UA client may be the same as that used in the OPC UA server, meaning the logic needs to be written only once. The effort needed to provide a runtime environment in a device management tool is thereby reduced. The nodeset file may furthermore be used in a way akin to a digital twin representing the device. Additionally, maintenance of the runtime environment using such validation logic, particularly when implemented as scripted logic, is easier than the maintenance of an EDD interpreter.

According to a second aspect, there is provided a method performed by an OPC UA server according to claim 3.

The OPC UA server may be an aggregating server. By deploying the validation logic to an aggregating server, other devices such as the client device and aggregated servers may be kept as simple as possible.

In the method of the second aspect, the automation device may operate according to a first standard that requires a first variable to be used to trigger a service and a second variable to be used as a status variable for reporting the status of the service, wherein the validation logic is configured to represent the first and second variables using a single, third variable according to a second standard that is incompatible with the first standard. In that case, the validation logic may comprise status logic and trigger logic, wherein the trigger logic is configured to monitor changes to the third variable and to write, in response to a detected change, a trigger to the first variable, and wherein the status logic is configured to monitor the second variable and to write status changes in the second variable to the third variable. In this way, the validation logic can be used to bridge between mutually incompatible standards.

By "validation logic" is meant logic that is intended to protect the integrity of the device settings and may alternatively be referred to as "integrity protection logic". In some implementations, the validation logic may implement so-called "business logic", which is to be understood within the context of the present disclosure as logic pertaining to the parameters or settings of the OPC UA-enabled device, and not to a method of doing business. A "parameter" may also be referred to as an "attribute".

In any aspect, the validation logic may be implemented using a PYTHON script or using any other appropriate language, especially scripting languages.

The validation logic may be stored in an appropriate manner in the nodeset file. In one example, the validation logic is stored in the nodeset file in a predetermined XML element, with the method of the first or second aspect further comprising identifying the element that contains the validation logic according to an established convention. Alternatively, in a second example, the validation logic may be stored in the nodeset file using a value attribute of a description of a UAVariable, the method of the first or second aspect further comprising identifying the UAVariable that contains the validation logic according to an established convention. Thus, the convention provides OPC UA clients and servers with the requisite knowledge concerning the location of the validation logic in the nodeset file.

In any aspect, validating the data may comprise using an information model to identify that a variable to be written is of a type that indicates a validation requirement, and executing the validation logic in relation to the variable to be written in response to the identifying. In that case, the information model may further define a status variable for carrying the result of the validation, the method further comprising modifying the status variable to indicate the result of executing the validation logic in relation to the variable to be written.

In any aspect, the validation logic may be stored in the nodeset file in encrypted form, for improved security against attackers seeking to target the validation logic.

According to a third aspect, there is provided a method comprising: creating the nodeset file according to claim 13.

Any of the methods described herein may furthermore comprise the step of implementing/performing/controlling an industrial manufacturing process using an industrial automation system comprising the said automation device to which data has been written. Any of the methods may comprise the preceding step of integrating the said automation device into the industrial automation system.

According to a fourth aspect, there is provided a computer-readable data carrier or a data carrier signal carrying the nodeset file created using the method of the third aspect.

According to a fifth aspect, there is provided a computing device comprising a processor configured to perform the method of any of the first, second, and third aspects.

According to a sixth aspect, there is provided a computer program product comprising instructions which, when executed by a computing device, enable or cause the computing device to perform the method of any of the first, second, and third aspects.

According to a seventh aspect, there is provided a computer-readable data carrier or a data carrier signal carrying instructions which, when executed by a computing device, enable or cause the computing device to carry out the method of any of the first, second, and third aspects.

The invention may include one or more aspects, examples or features in isolation or combination whether or not specifically disclosed in that combination or in isolation. Any optional feature or sub-aspect of one of the above aspects applies as appropriate to any of the other aspects.

These and other aspects of the invention will be apparent from and elucidated with reference to the embodiments described hereinafter.

### BRIEF DESCRIPTION OF THE DRAWINGS

A detailed description will now be given, by way of example only, with reference to the accompanying drawings, in which:-
Fig. 1 illustrates the configuration of a field device according to a first example;
Fig. 2 illustrates the configuration of a field device according to a second example;
Fig. 3 shows a non-hierarchical, asymmetric reference type for variables;
Fig. 4 shows a script targeted by a reference of the type shown in Fig. 3;
Fig. 5 illustrates a nodeset integrity protection concept;
Fig. 6 illustrates one example use case involving scripted parameter validation performed in relation to a field device following the OPC UA specified PA-DIM Model;
Fig. 7 illustrates a further example use case involving bridging to IEC 61499; and
Fig. 8 illustrates a computing device that can be used in accordance with the devices and methods disclosed herein.

### DETAILED DESCRIPTION

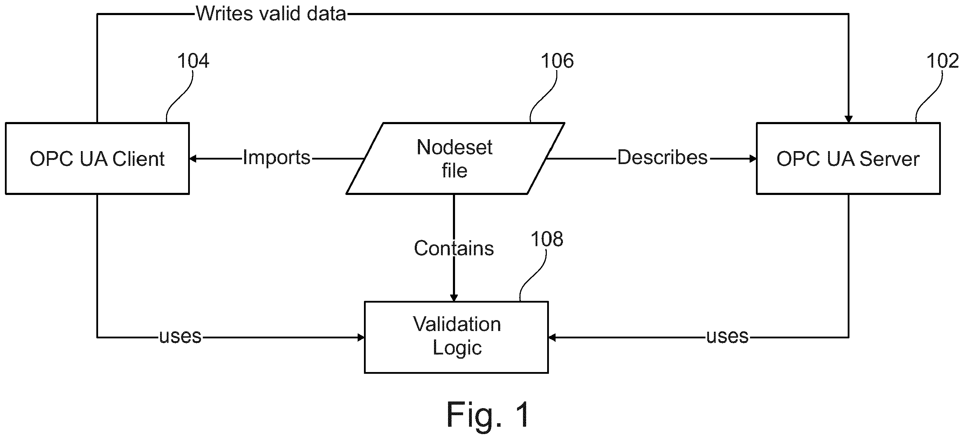

Fig. 1 illustrates the configuration or parameterisation of a field device according to a first example.

The field device (not shown) comprises an OPC UA server 102. OPC UA is a platform-independent, service-oriented client-server architecture which transports data such as control values, measurement values, and parameters, and which semantically describes the data. The OPC UA server 102 receives and exposes such data from the field device. The OPC UA server 102 supports information models which define how the data is typed and classified. The representation of the exposed data is called the address space.

An OPC UA client 104 is in communication with the OPC UA server 102. The OPC UA client 104 may be an application that connects to the OPC UA server 102. The OPC UA client 104 may be used, for example, to find data from the address space of the OPC UA server 102, to read and write server data, to subscribe to certain data changes or events such as alarms, and to call server methods. Communication between the OPC UA server 102 and the OPC UA client 104 is handled by services.

The OPC UA server 102 is described by a nodeset file 106. The nodeset file 106 provides a mechanism for data exchange in the OPC UA environment and may take the form of an XML file. The nodeset file 106 describes the address space of the OPC UA server 102.

According to the present disclosure, the nodeset file 106 further comprises validation logic 108 for ensuring the logical integrity of the device settings. The validation logic 108 may comprise PYTHON script-described logic added to the nodeset file 106 to enable a generic approach to validating settings in the address space of the OPC UA server 102 of the field device without necessarily being connected to that device. Various ways of integrating the logic into the nodeset file 106, along with examples of suitable validation logic, are described below.

In order to configure the field device, the OPC UA client 104 imports the nodeset file 106 to discover how to interact with the field device. During the configuration, the OPC UA client 102 uses the validation logic 108 to ensure the validity of data that is written to the OPC UA server 102 of the field device.

The OPC UA server 102 similarly uses the validation logic 108 to validate the data.

In this way, the OPC UA client 104, being able to import the validation logic 108 and knowing how to invoke and handle the execution of the scripted logic, can prepare a valid dataset for the field device, even in the absence of the field device.

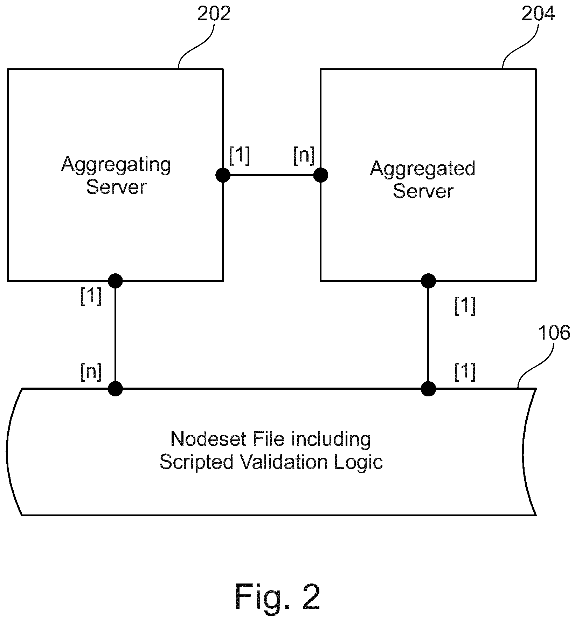

Fig. 2 illustrates the configuration of a field device according to a second example in which the OPC UA system is organized according to an aggregation architecture involving an aggregating server 202 and at least one aggregated server 204. The aggregated server 204 is the OPC UA server of an entity of the automation system such as a field device. The aggregating server 202 connects to each underlying aggregated server 204 via OPC UA services and aggregates its type, instance, and structure information. Thus, a single server can be used to connect to multiple other servers and to represent their information in a unified manner. In this way, a client connecting to the aggregating server 202 can access the data of multiple aggregated servers 204 from a single source. In this example, the validation logic 108 is executed only by the aggregating server 202, such that generic OPC UA clients may be used. In this way, the OPC UA client may be implemented on a resource-limited device that is unable to run scripted logic because of the resource consumption of a script interpreter. The notation in Fig. 2 (following UML graphical syntax) indicates the number of instances possible in the depicted relation. Thus, there is one ("[1]") aggregating server 202 that can aggregate multiple ("[n]") OPC UA servers as aggregated servers 204. For the sake of the brevity and regarding the application of scripted logic, each of the aggregated OPC UA servers ("[1]") is described by one ("[1]") nodeset file 106, although it will be understood that the present disclosure is not so limited. Therefore, the single ("[1]") aggregating server 202 can handle multiple ("[n]") nodeset files 106 relating respectively to the aggregated OPC UA servers 204. It will be understood that some aggregated servers 204 may not need any additional validation logic and can be aggregated by browsing their address spaces.

In any of the examples described herein, the validation logic 108 may be incorporated into the nodeset file 106 in any one of various suitable ways.

According to a first implementation, the validation logic 108 is embodied as a PYTHON script and stored in the nodeset file 106 in the XML element designated "Extension", which can refer for example to vendor specific schemata. In this implementation, the OPC UA client is configured to identify the extension that contains the scripted function. This identification may be performed according to an established convention. Similarly, the OPC UA server may leverage the same validation logic 108 to protect the logical integrity of data. Advantageously, the effort required to provide the validation logic for protecting the logical integrity of data is reduced, since the validation logic needs to be written only once. A further advantage of this implementation is its ability to hide the validation logic.

According to a second implementation, the PYTHON script is stored in the nodeset file 106 using the value attribute of the description of a UAVariable. In this implementation, the OPC UA client is configured to identify the UAVariable that contains the scripted function. This identification may again be performed according to an established convention. The advantage as compared to the first implementation is that the second implementation supports debugging (inspection) of scripted functions on the OPC UA server. Moreover, an OPC UA client can import the validation logic 108 from the OPC UA server immediately if there is no nodeset file available. (Since the nodeset file 106 represents at least a part of the address space, the approach of providing the scripted logic in the value of a variable makes the script available either by means of reading the nodeset file 106 or reading (e.g., via the OPC UA Read Service) the value of the variable. The scripted logic 108 may enter the OPC UA server's address space in any appropriate manner.) A further advantage is that, if the UAVariable is write-enabled, the PYTHON script may be modified.

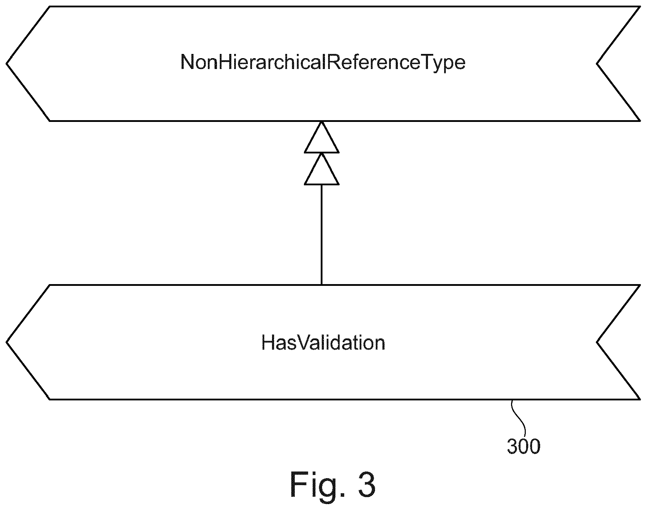

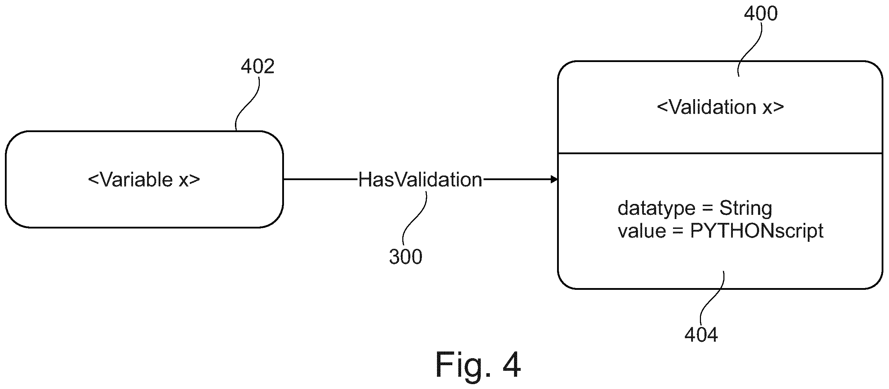

In the second implementation, an information model may be created using a reserved namespace to avoid conflicts with other application-specific content of the address space. The reserved name space defines a non-hierarchical, asymmetric reference type 300 named "HasValidation", for example, as shown in Fig. 3. The inverse name may be "Validates". A reference of type "HasValidation" targets a variable 400 storing the PYTHON script 404 in a string, as shown in Fig. 4. In this way, any writable element in the address space can refer to the validation logic 108. If a value is written for a variable 402 that refers to the validation logic 108, by virtue of the variable having the type "HasValidation" 300, the OPC UA client can load and execute the PYTHON script 404. The OPC UA client 104 provides an execution environment comprising a PYTHON script interpreter and a call back interface that enables reading and writing of other data of the address space. According to the established convention, the PYTHON validating script 404 sets an output flag indicating the result of the integrity check. Furthermore, the same script 404 may executed inside the device embedded OPC UA server 102, with the result of that script execution being reflected in a further status variable. In this way, execution of the validation logic is triggered post-write.

The information model may furthermore establish a convention defining how a PYTHON script such as 404 can access variables of the address space. The script 404 may be enabled according to the convention to collect data needed for the validation and/or to fix settings and to indicate the validity of the data set.

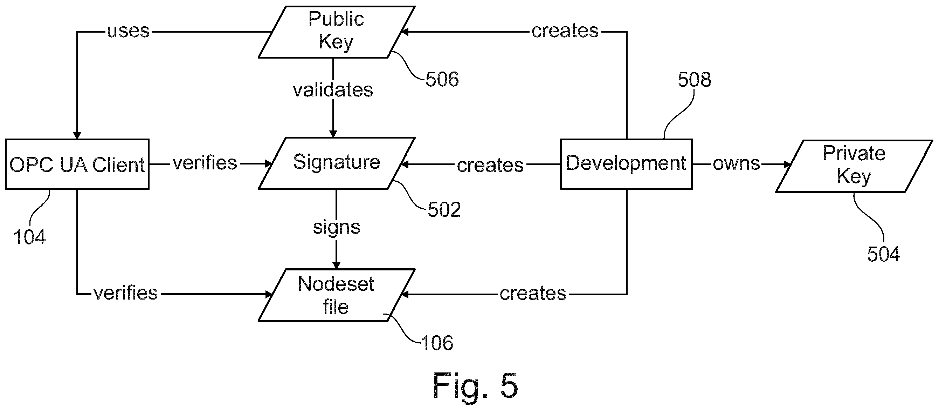

Fig. 5 illustrates the nodeset integrity protection concept. Asymmetric cryptography methods like a PKI can be used to protect the nodeset file 106 against illicit modifications, since the PYTHON script 404 may present a target for attackers. The nodeset file 106 may be protected using a signature 502 that is created with a private key 504, while the same signature 502 and the content of the nodeset file 106 can be validated with a public key 506. The private key 504 and public key 506, as well as the nodeset file 106, are created during development 508 of the OPC UA server 102. The private key 504 is kept in a safe place. The public key 506 is inferred from the private key 504. The private key 504 is used to encrypt the signature 502 of the nodeset file 106. The signature 502 hashes the nodeset file 106 so as to represent a compressed form of the content of the nodeset file 106.

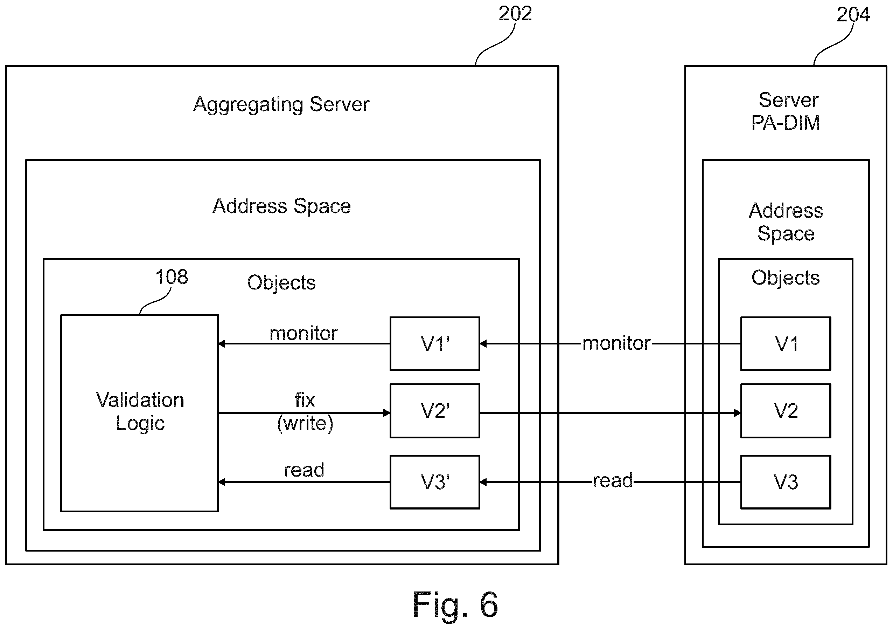

Fig. 6 illustrates one example use case involving scripted parameter validation performed in relation to a field device following the OPC UA specified PA-DIM Model. The field device (not shown) runs using a parameter set in which the parameter V2 depends on the values of parameters V1 and V3, i.e., V2 =f (V1, V3). The aggregating server 202 aggregates the parameters of the field device by representing them using the proxy parameters V1', V2' and V3'. The validation logic 108 is configured to monitor changes in parameter V1', which monitors the changes in the aggregated parameter V1. If V1 changes, V1' change as well, which triggers the execution of the validation logic 108. Since V2 depends on the values of parameters V1 and V3, the validation logic 108 reads the value of parameter V3 through its proxy parameter V3'. The validation logic 108 calculates V2' and writes a new value to V2' which is in turn forwarded to V2.

Aside from the device integration examples described above, write-triggered validation logic can be used to bridge between control applications that are incompatible by their design principles.

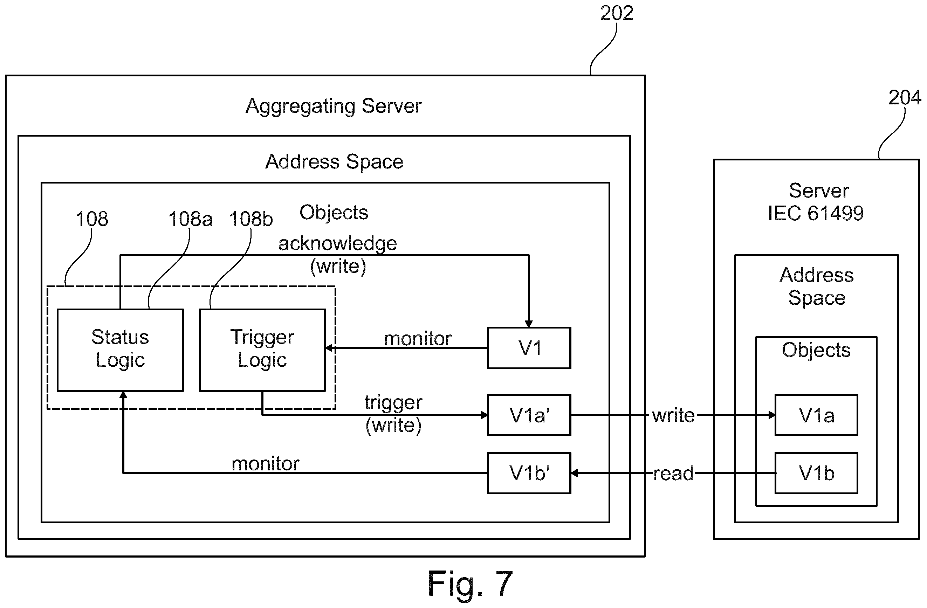

In particular, Fig. 7 illustrates a further example use case involving bridging to IEC 61499. According to IEC 61499, control functions (services) are triggered by writing one variable ("Event") and the status of completion is reported through a separate variable ("Feedback"). In contrast, according to VDI 2658, a control function (state-machine) is managed by means of a single variable that is written to trigger an execution and the status feedback is communication through the same variable. Under the different design principles, a programmable logic controller (PLC) applying IEC 61499 cannot be used in a modular automation system that applies VDI 2658. While VDI 2858 runs on OPC UA, the aggregating OPC UA server 202 implementing validation logic 108 as described herein can be configured to bridge between the different standards (VDI2658 / IEC 61499). The address space of the aggregating server 202 represents a VDI 2658 defined service object with the control & status variable (V1). This variable V1 is used to represent (aggregate) the control objects of the OPC UA server 204 of another PLC that follows IEC 61499, in which one variable (V1a) is used to trigger a service while another variable (V1b) is used as the status reporting variable. Variables V1a' and V1b' are aggregated representations of variables V1a and V1b, respectively. The validation logic 108 in this case comprises status logic 108a and trigger logic 108b. The trigger logic 108b monitors changes to variable V1 and writes the resulting trigger to the proxy variable V1a', to be forwarded to the aggregated variable V1a. The status logic 108a monitors the proxy variable V1b' for changes made in the aggregated status variable V1b, and writes status changes on variable V1b' to the variable V1.

The approaches described herein can be extended towards the application logic of the automation device, for example to parts of the firmware comprising logic relating to I/O functions dealing with the hardware specifics, protocol stacks, generic math libraries, etc.

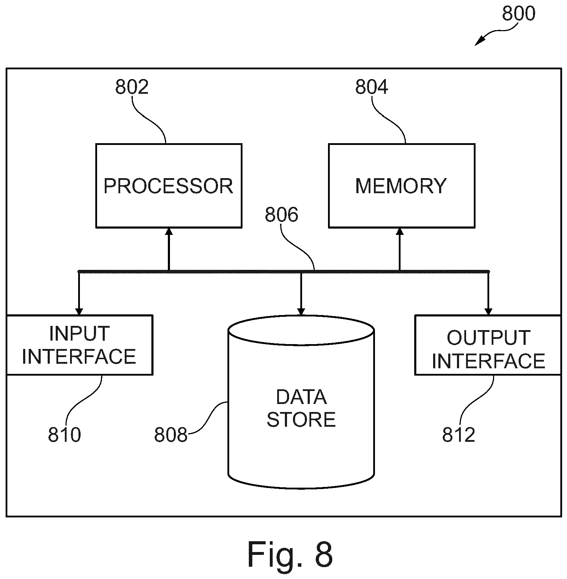

Referring now to Fig. 8, a high-level illustration of an exemplary computing device 800 that can be used in accordance with the systems and methodologies disclosed herein is illustrated. The computing device 800 includes at least one processor 802 that executes instructions that are stored in a memory 804. The instructions may be, for instance, instructions for implementing functionality described as being carried out by one or more components discussed above or instructions for implementing one or more of the methods described above. The processor 802 may access the memory 804 by way of a system bus 806. In addition to storing executable instructions, the memory 804 may also store conversational inputs, scores assigned to the conversational inputs, etc.

The computing device 800 additionally includes a data store 808 that is accessible by the processor 802 by way of the system bus 806. The data store 808 may include executable instructions, log data, etc. The computing device 800 also includes an input interface 810 that allows external devices to communicate with the computing device 800. For instance, the input interface 810 may be used to receive instructions from an external computer device, from a user, etc. The computing device 800 also includes an output interface 812 that interfaces the computing device 800 with one or more external devices. For example, the computing device 800 may display text, images, etc. by way of the output interface 812.

It is contemplated that the external devices that communicate with the computing device 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 800 may be a distributed system. Thus, for instance, several devices may be in communication by way of a network connection and may collectively perform tasks described as being performed by the computing device 800.

Various functions described herein can be implemented in hardware, software, or any combination thereof. If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

It will be appreciated that the aforementioned circuitry may have other functions in addition to the mentioned functions, and that these functions may be performed by the same circuit.

## Claims

1. A method comprising, by an OPC UA client (104):
importing a nodeset file (106) pertaining to an OPC UA-enabled automation device, wherein the nodeset file describes an address space of an OPC UA server (102) of the automation device and further comprises validation logic (108) used to validate data to be written to the automation device;
preparing data to be written to the automation device;
using the validation logic to validate the prepared data; and
writing the validated data to the automation device;
the method further comprising performing an industrial manufacturing process using an industrial automation system comprising the said automation device to which data has been written.

2. The method of claim 1, wherein the data is prepared before the OPC UA server (102) of the automation device has been deployed.

3. A method comprising, by an OPC UA server (102; 202):
importing a nodeset file (106) pertaining to an automation device in which the OPC UA server is embedded, wherein the nodeset file describes an address space of the OPC UA server and further comprises validation logic (108) used to validate data to be written to the automation device;
receiving data to be written to the automation device; and
using the validation logic to validate the received data;
the method further comprising parameterising the field device using the validated data, and performing an industrial manufacturing process using an industrial automation system comprising the said automation device to which data has been written.

4. The method of claim 3, wherein the OPC UA server is an aggregating server (202).

5. The method of claim 3 or 4, wherein the automation device operates according to a first standard that requires a first variable to be used to trigger a service and a second variable to be used as a status variable for reporting the status of the service, wherein the validation logic (108) is configured to represent the first and second variables using a single, third variable according to a second standard that is incompatible with the first standard.

6. The method of claim 5, wherein the validation logic (108) comprises status logic and trigger logic, wherein the trigger logic is configured to monitor changes to the third variable and to write, in response to a detected change, a trigger to the first variable, and wherein the status logic is configured to monitor the second variable and to write status changes in the second variable to the third variable.

7. The method of any preceding claim, wherein the validation logic (108) is implemented using a PYTHON script (404).

8. The method of any preceding claim, wherein the validation logic (108) is stored in the nodeset file (106) in a predetermined XML element, the method further comprising identifying the element that contains the validation logic according to an established convention.

9. The method of any of claims 1-7, wherein the validation logic (108) is stored in the nodeset file (106) using a value attribute of a description of a UAVariable, the method further comprising identifying the UAVariable that contains the validation logic according to an established convention.

10. The method of any preceding claim, wherein validating the data comprises using an information model to identify that a variable (402) to be written is of a type (300) that indicates a validation requirement, and executing the validation logic (108) in relation to the variable to be written in response to the identifying.

11. The method of claim 10, wherein the information model further defines a status variable for carrying the result of the validation, the method further comprising modifying the status variable to indicate the result of executing the validation logic (108) in relation to the variable to be written.

12. The method of any preceding claim, wherein the validation logic (108) is stored in the nodeset file (106) in encrypted form.

13. A method comprising:
creating the nodeset file (106) as claimed in claim 1 or 3, the nodeset file (106) pertaining to the OPC UA-enabled automation device, wherein the nodeset file describes the address space of the OPC UA server (102) of the automation device and further comprises the validation logic (108) used to validate the data to be written to the automation device.

14. A computing device (800) comprising a processor (802) configured to perform the method of any preceding claim.

15. A computer-readable medium (804, 808) comprising instructions which, when executed by a computing device (800), cause the computing device to carry out the method of any of claims 1-13.

## Patentansprüche

1. Verfahren, umfassend, durch einen OPC UA-Client (104):
Importieren einer Nodeset-Datei (106), die sich auf ein OPC UA-fähiges Automatisierungsgerät bezieht, wobei die Nodeset-Datei einen Adressraum eines OPC UA-Servers (102) des Automatisierungsgeräts beschreibt und ferner Validierungslogik (108) umfasst, die zur Validierung von Daten verwendet wird, die in das Automatisierungsgerät geschrieben werden sollen;
Vorbereiten von Daten, die in das Automatisierungsgerät geschrieben werden sollen;
Verwenden der Validierungslogik zur Validierung der vorbereiteten Daten; und
Schreiben der validierten Daten in das Automatisierungsgerät;
das Verfahren umfasst ferner das Durchführen eines industriellen Fertigungsprozesses unter Verwendung eines industriellen Automatisierungssystems, das das genannte Automatisierungsgerät umfasst, in welches Daten geschrieben wurden.

2. Verfahren nach Anspruch 1, wobei die Daten vorbereitet werden, bevor der OPC UA-Server (102) des Automatisierungsgeräts bereitgestellt wurde.

3. Verfahren, umfassend, durch einen OPC UA-Server (102; 202):
Importieren einer Nodeset-Datei (106), die sich auf ein Automatisierungsgerät bezieht, in das der OPC UA-Server eingebettet ist, wobei die Nodeset-Datei einen Adressraum des OPC UA-Servers beschreibt und ferner Validierungslogik (108) umfasst, die zur Validierung von Daten verwendet wird, die in das Automatisierungsgerät geschrieben werden sollen;
Empfangen von Daten, die in das Automatisierungsgerät geschrieben werden sollen; und
Verwenden der Validierungslogik zur Validierung der empfangenen Daten;
das Verfahren umfasst ferner die Parametrisierung des Feldgeräts unter Verwendung der validierten Daten und das Durchführen eines industriellen Fertigungsprozesses unter Verwendung eines industriellen Automatisierungssystems, das das genannte Automatisierungsgerät umfasst, in welches Daten geschrieben wurden.

4. Das Verfahren nach Anspruch 3, wobei der OPC UA-Server ein aggregierender Server (202) ist.

5. Verfahren nach Anspruch 3 oder 4, wobei das Automatisierungsgerät nach einem ersten Standard arbeitet, der erfordert, dass eine erste Variable verwendet wird, um einen Dienst auszulösen, und eine zweite Variable als Statusvariable für die Berichterstattung über den Status des Dienstes verwendet wird, wobei die Validierungslogik (108) so konfiguriert ist, dass die erste und zweite Variable unter Verwendung einer einzigen, dritten Variable nach einem zweiten Standard, der mit dem ersten Standard unvereinbar ist, dargestellt wird.

6. Verfahren nach Anspruch 5, wobei die Validierungslogik (108) Statuslogik und Triggerlogik umfasst, wobei die Triggerlogik so konfiguriert ist, Änderungen an der dritten Variable zu überwachen und, in Reaktion auf eine erkannte Änderung, einen Trigger an die erste Variable zu schreiben, und wobei die Statuslogik so konfiguriert ist, die zweite Variable zu überwachen und Statusänderungen in der zweiten Variable in die dritte Variable zu schreiben.

7. Verfahren nach einem der vorhergehenden Ansprüche, wobei die Validierungslogik (108) unter Verwendung eines PYTHON-Skripts (404) implementiert ist.

8. Verfahren nach einem der vorhergehenden Ansprüche, wobei die Validierungslogik (108) in der Nodeset-Datei (106) in einem vordefinierten XML-Element gespeichert ist, und das Verfahren ferner umfasst das Identifizieren des Elements, das die Validierungslogik gemäß einer etablierten Konvention enthält.

9. Verfahren nach einem der Ansprüche 1-7, wobei die Validierungslogik (108) in der Nodeset-Datei (106) unter Verwendung eines Wertattributs einer Beschreibung einer UAVariable gespeichert ist, und das Verfahren ferner umfasst das Identifizieren der UAVariable, die die Validierungslogik gemäß einer etablierten Konvention enthält.

10. Verfahren nach einem der vorhergehenden Ansprüche, wobei die Validierung der Daten die Verwendung eines Informationsmodells umfasst, um zu identifizieren, dass eine zu schreibende Variable (402) von einem Typ (300) ist, der eine Validierungsanforderung anzeigt, und das Ausführen der Validierungslogik (108) in Bezug auf die zu schreibende Variable als Reaktion auf die Identifizierung.

11. Verfahren nach Anspruch 10, wobei das Informationsmodell ferner eine Statusvariable definiert, die das Ergebnis der Validierung enthält, und das Verfahren ferner umfasst das Modifizieren der Statusvariable, um das Ergebnis der Ausführung der Validierungslogik (108) in Bezug auf die zu schreibende Variable anzuzeigen.

12. Verfahren nach einem der vorhergehenden Ansprüche, wobei die Validierungslogik (108) in der Nodeset-Datei (106) in verschlüsselter Form gespeichert ist.

13. Verfahren, umfassend:
Erstellen der Nodeset-Datei (106) gemäß Anspruch 1 oder 3, wobei sich die Nodeset-Datei (106) auf das OPC UA-fähige Automatisierungsgerät bezieht, und wobei die Nodeset-Datei den Adressraum des OPC UA-Servers (102) des Automatisierungsgeräts beschreibt und ferner die Validierungslogik (108) umfasst, die zur Validierung der Daten verwendet wird, die in das Automatisierungsgerät geschrieben werden sollen.

14. Rechengerät (800), umfassend einen Prozessor (802), der so konfiguriert ist, das Verfahren nach einem der vorhergehenden Ansprüche auszuführen.

15. Computerlesbares Medium (804, 808), umfassend Anweisungen, die, wenn sie von einem Rechengerät (800) ausgeführt werden, das Rechengerät dazu veranlassen, das Verfahren nach einem der Ansprüche 1-13 auszuführen.

## Revendications

1. Procédé comprenant, par un client OPC UA (104), les étapes suivantes :
importer un fichier de configuration de noeuds ou nodeset (106) relatif à un dispositif d'automatisation compatible OPC UA, où le fichier de configuration de noeuds décrit un espace d'adressage d'un serveur OPC UA (102) du dispositif d'automatisation et comprend en outre une logique de validation (108) utilisée pour valider les données à écrire dans le dispositif d'automatisation ;
préparer les données à écrire dans le dispositif d'automatisation ;
utiliser la logique de validation pour valider les données préparées ; et
écrire les données validées dans le dispositif d'automatisation ;
le procédé comprenant en outre d'exécuter un processus de fabrication industrielle à l'aide d'un système d'automatisation industrielle comprenant ledit dispositif d'automatisation dans lequel des données ont été écrites.

2. Procédé selon la revendication 1, dans lequel les données sont préparées avant que le serveur OPC UA (102) du dispositif d'automatisation n'ait été déployé.

3. Procédé comprenant, par un serveur OPC UA (102 ; 202), les étapes suivantes :
importer un fichier de configuration de noeuds (106) relatif à un dispositif d'automatisation dans lequel le serveur OPC UA est intégré, où le fichier de configuration de noeuds décrit un espace d'adressage du serveur OPC UA et comprend en outre une logique de validation (108) utilisée pour valider les données à écrire dans le dispositif d'automatisation ;
recevoir des données à écrire dans le dispositif d'automatisation ; et
utiliser la logique de validation pour valider les données reçues ;
le procédé comprenant en outre de paramétrer le dispositif de terrain à l'aide des données validées, et d'exécuter un processus de fabrication industrielle à l'aide d'un système d'automatisation industrielle comprenant ledit dispositif d'automatisation dans lequel des données ont été écrites.

4. Procédé selon la revendication 3, dans lequel le serveur OPC UA est un serveur d'agrégation (202).

5. Procédé selon la revendication 3 ou la revendication 4, dans lequel le dispositif d'automatisation fonctionne selon une première norme qui exige qu'une première variable soit utilisée pour déclencher un service et qu'une deuxième variable soit utilisée comme variable d'état pour signaler l'état du service, la logique de validation (108) étant configurée pour représenter les première et deuxième variables à l'aide d'une troisième variable unique selon une deuxième norme incompatible avec la première norme.

6. Procédé selon la revendication 5, dans lequel la logique de validation (108) comprend une logique d'état et une logique de déclenchement, où la logique de déclenchement est configurée pour surveiller les changements apportés à la troisième variable et pour écrire, en réponse à un changement détecté, un déclencheur dans la première variable, et où la logique d'état est configurée pour surveiller la deuxième variable et pour écrire les changements d'état contenus dans la deuxième variable dans la troisième variable.

7. Procédé selon l'une quelconque des revendications précédentes, dans lequel la logique de validation (108) est mise en œuvre à l'aide d'un script PYTHON (404).

8. Procédé selon l'une quelconque des revendications précédentes, dans lequel la logique de validation (108) est stockée dans le fichier de configuration de noeuds (106) dans un élément XML prédéterminé, le procédé comprenant en outre d'identifier l'élément qui contient la logique de validation selon une convention établie.

9. Procédé selon l'une quelconque des revendications 1 à 7, dans lequel la logique de validation (108) est stockée dans le fichier de configuration de noeuds (106) à l'aide d'un attribut de valeur d'une description d'une variable UA, le procédé comprenant en outre d'identifier la variable UA qui contient la logique de validation selon une convention établie.

10. Procédé selon l'une quelconque des revendications précédentes, dans lequel la validation des données comprend d'utiliser un modèle d'informations pour identifier qu'une variable (402) à écrire est d'un type (300) qui indique une exigence de validation, et d'exécuter la logique de validation (108) en relation avec la variable à écrire en réponse à l'identification.

11. Procédé selon la revendication 10, dans lequel le modèle d'informations définit en outre une variable d'état pour porter le résultat de la validation, le procédé comprenant en outre de modifier la variable d'état pour indiquer le résultat de l'exécution de la logique de validation (108) en relation avec la variable à écrire.

12. Procédé selon l'une quelconque des revendications précédentes, dans lequel la logique de validation (108) est stockée dans le fichier de configuration de noeuds (106) sous forme cryptée.

13. Procédé comprenant les étapes suivantes :
créer le fichier de configuration de noeuds (106) tel que revendiqué dans les revendications 1 ou 3, le fichier de configuration de noeuds (106) se rapportant au dispositif d'automatisation compatible OPC UA, où le fichier de configuration de noeuds décrit l'espace d'adressage du serveur OPC UA (102) du dispositif d'automatisation et comprend en outre la logique de validation (108) utilisée pour valider les données à écrire dans le dispositif d'automatisation.

14. Dispositif informatique (800) comprenant un processeur (802) configuré pour exécuter le procédé de l'une quelconque des revendications précédentes.

15. Support lisible par ordinateur (804, 808) comprenant des instructions qui, lorsqu'elles sont exécutées par un dispositif informatique (800), amènent le dispositif informatique à exécuter le procédé de l'une quelconque des revendications 1 à 13.
